# EUROPEAN PATENT APPLICATION

(11) **EP 1 385 297 A1**
(43) Date of publication of application: **28.01.2004**
(21) Application number: 02720015.3
(22) Date of filing: 03.04.2002
(51) Int. Cl.: H04L 12/24

(54) **AUTONOMOUS SYSTEM FOR REMOTE MANAGEMENT OF DEVICES SUBJECT TO PAY-PER-USE SERVICES**

(30) Priority: 05.04.2001 ES 200100802
(71) Applicant: Pulsar Technologies, S.A., 28230 Las Rozas (ES)
(72) Inventor: PRIETO MORENO TORRES, Andrés, E-28230 Las Rozas (Madrid) (ES); SANCHEZ NAVARRO, Antonio, E-28230 Las Rozas (Madrid) (ES)
(74) Representative: Carpintero Lopez, Francisco
(86) International application number: PCT/ES2002/000163
(87) International publication number: WO 2002/082726

(57) **Abstract**

Stand-alone system for the remote management of pay-for-use devices, such as printers, fax machines, scanners, servers and routers, among others, constituted by electronic devices (1), of reduced size, connected to each of the remote units (4) to be managed, capable of reading the meter value, processing and storing the information and sending it, through one or several existing communications networks (2), to a collection centre (3). Specifically, said device (1) has an interface for connection to the ETHERNET network for sending and receiving electronic mail via Internet, or for configuring the device itself through a server accessing its web page, and a GSM modem for sending the information by means of calls or short messages via radio. Also, the Flash EEPROM and dynamic RAM allow the software required by the system and the data storage respectively to be run.

## Description

### OBJECT OF THE INVENTION

The present invention relates to a stand-alone system specially intended for remote management of pay-for-use devices such as printers, fax machines, scanners, servers, routers or other similar elements, which includes essential characteristics of innovation and appreciable advantages with regard to the procedures known in the current state of the art and intended for these same ends.

The invention is likewise applicable to any other types of remote device subject to being employed in a pay-for-use service, such as television decoders, vehicles, gas supply meters, etc.

In a more particular way, the invention proposes the development of a system constituted by some electronic devices, of reduced size, connected to multiple remote units connected in a network, for example in large offices where there is a high number of this type of remote unit, or in an individual way to a single remote unit to be managed, with the necessary means to gather data relative to their operation as may be the reading of meters or any other information like operational problems, etc. Said information is processed, and stored for sending over one or several existing telecommunications networks, to a remote central data station.

Said device (1) has an interface for connection to the ETHERNET network for sending and receiving electronic mail via Internet, or to configure the device itself through a server by accessing its web page, and a GSM modem for sending the information by means of calls or short messages via radio.

The correct operation of the device is governed by a microprocessor which runs the necessary software stored in a static memory and is accelerated by a dynamic memory.

The field of application of the present invention lies within the telecommunications sector in general, and more particularly the remote exploitation of electronic pay-for-use devices.

### BACKGROUND OF THE INVENTION

At the present time, the companies in charge of managing and controlling such devices as printers, fax machines, scanners, servers, routers or other similar pay-for-use elements, which are located in different remote points, have the difficult task of collecting the different readings from the meters with which said devices are fitted.

In this respect, there are basically two solutions for carrying out reliable data acquisition: on one hand the use of qualified personnel to read the meters by onsite visits, and on the other hand the setting-up of a communications network via radio over which the meters send the information to a centre for collection, processing and storage of data.

However, these methods have the drawback that, in a case where the devices are located all over the world, it is not economically viable to install a private worldwide radio network, nor to displace personnel to the remote location of each device merely to read the data stored in the meters.

Thus, the present invention proposes a stand-alone system for remote management of pay-for-use devices, capable of reading the meters, or in the absence thereof to implement them, at the same time as it allows the transmission of the data acquired over the existing telecommunications networks.

### DESCRIPTION OF THE INVENTION

In a more specific way, the system is constituted by some electronic devices, of reduced size, connected to each of the remote pay-for-use devices to be managed, capable of reading the meter's value, processing the information and sending it, over one or several communications networks, to a collection centre.

The electronic device of the invention, is likewise capable of managing several remote elements connected in a network, equipping for this means to read the status of all the units connected to a network.

Essentially, the electronic device capable of reading the meters of the remote units, is of reduced size, whereby it is even possible to install it inside the remote units. Also, in the event that the unit does not have its own meter, this device can have one fitted.

When the data have been read, said device has the hardware and software necessary to process the information.

Thus, excessive data traffic to the centre is avoided, since the device processes the information and simply sends the results and conclusions to the centre, reducing also the risk of data loss and the cost of the transmission.

Another safety measure for the data which the system object of the invention provides, consists in providing at least two different and independent routes for sending information, so that in the event of one failing, the other can be used. For this reason the electronic device has interfaces for connection with Internet and with the mobile telephony networks.

### DESCRIPTION OF THE DRAWINGS

The features outlined above, are presented in graphic form making use of figures of the drawings attached, wherein by way of illustration and not restrictively, a preferred form of embodiment has been represented in said drawings:
Figure 1 shows a schematic of the block diagram of the stand-alone system for remote management of pay-for-use devices, object of the invention.

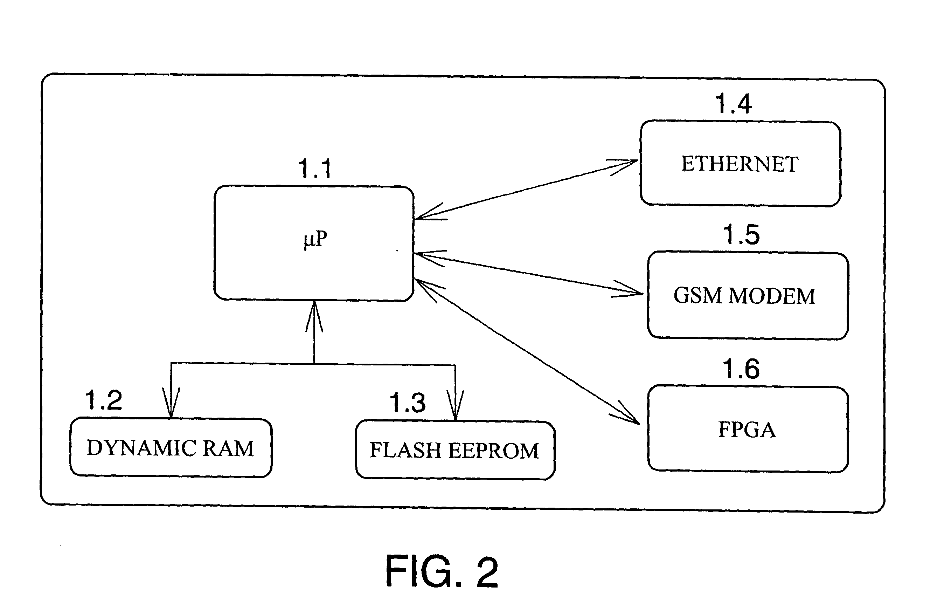

Figure 2 shows a block diagram of the hardware of the device which manages the data from the meters as well as the sending thereof.
Figure 3 shows a functional diagram of the task planning module.

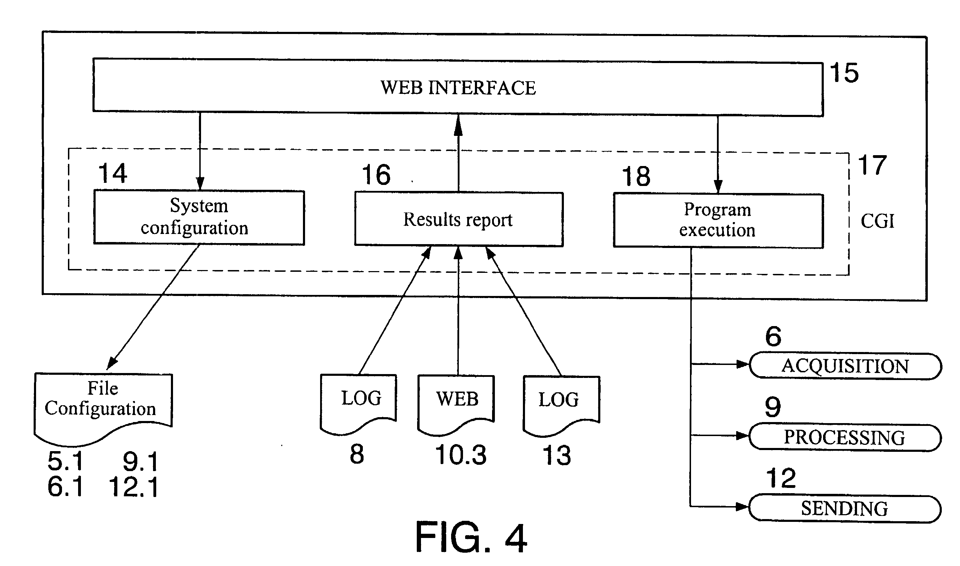

Figure 4 shows a functional diagram of the WEB server which the invention incorporates.
Figure 5 shows a functional diagram of the GSM communications module.
Figure 6 shows a functional diagram of the SMS communications module.
Figure 7 shows a functional diagram of the data acquisition module.

### PREFERRED EMBODIMENT OF THE INVENTION

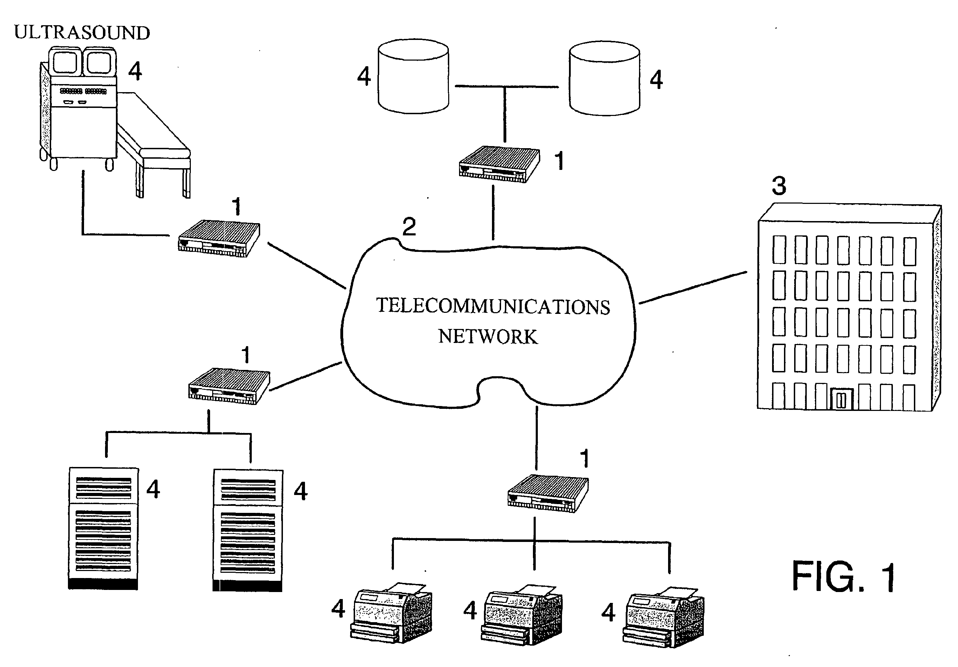

In making the detailed description which follows of the preferred embodiment of the present invention, constant reference will be made to the figures of the drawings, throughout which the same numerical references have been used for the same or similar parts. Thus, with reference, first of all, to figure 1, the invention has foreseen the emplacement of an electronic device (1) of data acquisition and management for a group connected in a network of units (4) subject to pay-for-use, in the preferred embodiment printers, fax machines, scanners, servers, routers and the like, capable of processing and sending the information via the communications network(s) (2) to the data centre (3).

Specifically, the electronic device (1) is constituted by a microcontroller (1.1) which runs the programs stored in a permanent memory (1.3), type FLASH EEPROM, even without power. This memory (1.3) contains the software necessary to run the stored programs processing the data obtained from reading the meter before they are sent to the centre (3).

Also, the aforementioned device (1) has a dynamic RAM memory (1.2), which stores data while the device is powered, and in the event of disconnection it loses them. The usefulness of this memory (1.2) consists in accelerating the access and reading times, since it allows the programs stored in the EEPROM (1.3) to run more quickly.

Lastly, to provide the connection with the data centre (3), the device (1) has two interfaces which allow the reading / writing and sending / receiving of the data: a card (1.4) which allows access to an ETHERNET network and a GSM modem (1.5).

Indeed, the connection (1.4) with ETHERNET allows the information to be sent using electronic mail, and therefore accessing the data remotely by browsing the Internet network (2). The modem (1.5) is capable of managing communications by means of the existing mobile telephony network (2), at world level, with standard communications via radio or with the sending and receiving of short messages according to the SMS standard.

The device has a chip of the FPGA type (1.6) which allows the functionality of the system to be enhanced and which is intended for implementing series/parallel ports and generic input/output pins. The FPGA circuit (1.6) is programmable at hardware level by means of sending small programs from the microcontroller (1.1), modifying in this way the operational capacity of the circuit to achieve with this FPGA circuit (1.6) the possibility of installing meters for those remote units (4) subject to pay-for-use which do not have internal meters.

As has been indicated above, the process of reading, processing and sending data is handled by the microprocessor (1.1) of the electronic device (1) which manages one or a group of remote units (4), by means of the necessary software, stored in the memory (1.3). The referenced software consists of a set of programs or independent modules and with a specific function, which is detailed below:
- Module for processing the sending and receiving of short messages, through the modem (1.5), according to the specifications of the GSM phase 2 standard.
- Module for processing the information received and sent via ETHERNET, by means of electronic mail, according to the SMTP standard.
- Web page server module to be able to access the web pages of the device (1) from any browser and to be able to configure the system from any platform with an Internet explorer.
- Data acquisition module which seeks and acquires new values from the meters, employing the SNMP protocol, which allows the meters to be read independently of the maker thereof, also through the ETHERNET interface (1.4), according to the preferred embodiment thereof. However, the data could be acquired directly through some general purpose outputs / inputs implemented by the FPGA circuit (1.6).

The remote units (4) have databases with the operating information thereof. To know which units (4) are connected in the network, a manual configuration of the device (1) can be carried out by upgrading a file in which the IP addresses of the printers would be indicated for example, or an automatic configuration can be carried out by using the DHCP protocol to obtain the list of devices (4).
- Operating system module, consisting of a kernel which manages the hardware resources and runs the rest of the modules described and of a file system capable of sorting all the files and programs of device (1), whereby, the operating system serves for the correct operation of all the program modules.

This modular structuring of the device supersedes the conventional systems based on a microcontroller, since instead of having a single application, it has several which are running independently and simultaneously, so that in the event that it is necessary to introduce changes in any of them it is only necessary to modify the affected application, whereby one avoids, in the case of having a single application, having to compile and record all of it, which makes maintenance of the units more difficult and more expensive.

Therefore the operating system of the system is multitasking and thereby allows several processes to be carried out simultaneously in the microcontroller.

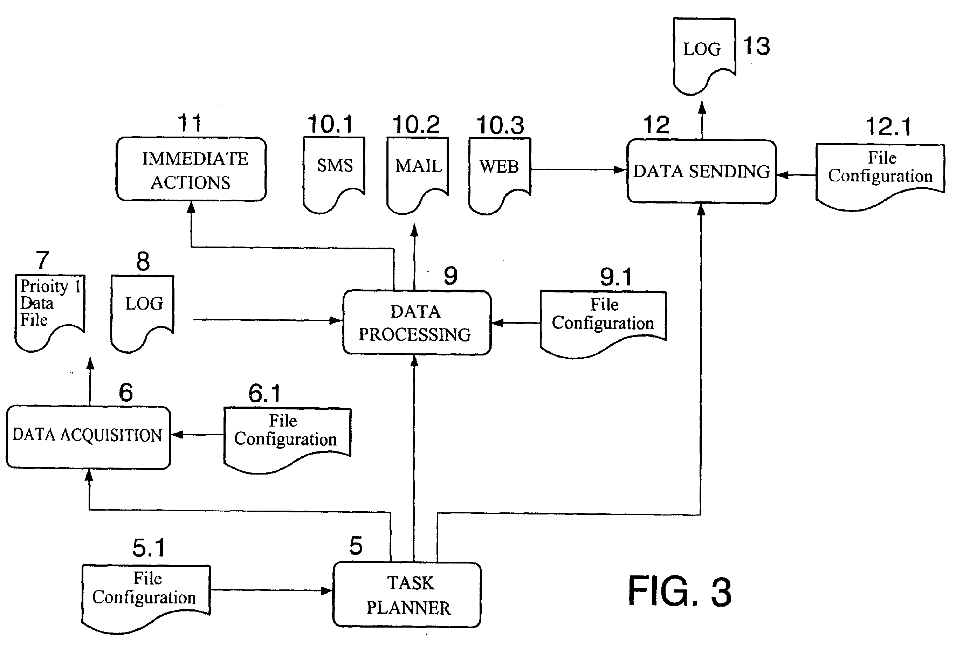

The different information processing modules are, in turn, managed by a task planning module (5) organized according to the diagram of figure 3. Said module (5) is established based on the operating system of the system, and runs continuously and has in association a configuration file (5.1) which indicates to it at what time each of the assigned tasks should be performed and by means of which the order can be established in which they will be executed.

The task planning module (5) first runs a program for data acquisition (6) which has in association its corresponding configuration file (6.1) wherein reside the parameters of the remote devices (4) which it has to read, as well as the procedure be this via a network or by means of the serial or parallel ports of the device (1). The data acquisition is stored in a file (7) and is classified according to the type of data obtained.

At the same time some report files (8) are generated wherein the information of the data acquisition process is stored, which is employed in the system administration tasks.

After the data acquisition has concluded, the task planner (5) activates data processing (9), which reads the files generated during data acquisition (7) and based thereon generates new files (10.1), (10.2) and (10.3) in which said information is sorted according to the means by which it will be sent, and inside each file the information is classified in turn according to the priority for the sending thereof. Thus, in file (10.1) the information will be stored which will be sent by SMS, in file (10.2) the information which will be sent by the MAIL service, and in the report file (10.3) the information to be offered on the WEB.

The configuration file (9.1) is associated with the data processing (9), and serves to indicate how the data obtained should be distinguished, where they should be stored, and whether they should be sent via network or by means of the ports of the FPGA circuit (1.6).

The data processing (9) therefore allows the information obtained to be treated appropriately as a function of their type and priority, it being possible to instigate immediate actions (11) avoiding having to send the information to and receive the information from the central offices (3). These immediate actions (11) can be urgent SMS short messages or mails, or the activation of the serial or parallel ports of the device (1).

After the data have been captured and have been processed, the task planner (5) runs the data sending module (12) which has its corresponding configuration file (12.1) defining the parameters of the communication. The sending of data is carried out according to priorities and over different routes be they e-mail or GSM.

The priority information can consist of fault or alarm situations in the remote devices (4), such as for example the toner running out in a printer. Non-priority information can be for example the reading of the remote unit meters.

On running the data sending module (12), some report files (13) are also generated wherein information is held useful for the system administration.

As has already been described above, the device (1) object of the invention has a WEB page server by means of which it is possible to read the content of the different files and even set up CGIs (17) (Common Gateway Interface) consisting of a known standard for running external programs from a WEB server, whereby it is possible for example to read the content of databases and format them as HTML.

By means of the WEB server, the centre (3) can access the device (1) from any browser and can know and modify by means of the configuration system (14) the status of its configuration files (5.1), (6.1), (9.1) and (12.1). To modify the configuration files, a series of WEB pages is accessed which are shown by means of the WEB interface (15) and the data are changed by means of some forms, based on which the configuration system (14) will subsequently modify the configuration files.

The WEB interface (15) by means of a results reporting module (16) gives access to another series of pages which show the report files (8), (10.3) and (13) which have been generated during the acquisition, processing and sending of the data, the content of these report files being translated to HTML by the results reporting module (16) itself.

In the WEB pages there are elements which serve to launch programs directly without waiting for the instruction from the task planner (5), for which there is a program execution block (18) which serves for translating the actions of the administrator (3) into calls to the data acquisition module (6), data processor (9), and data sending (12).

Therefore, the running of programs on the WEB server is linked to the running of programs on the Operating System, which provides greater ease and simplicity for remote management since the centre (3) can have access to all the modules comprising the system from any browser.

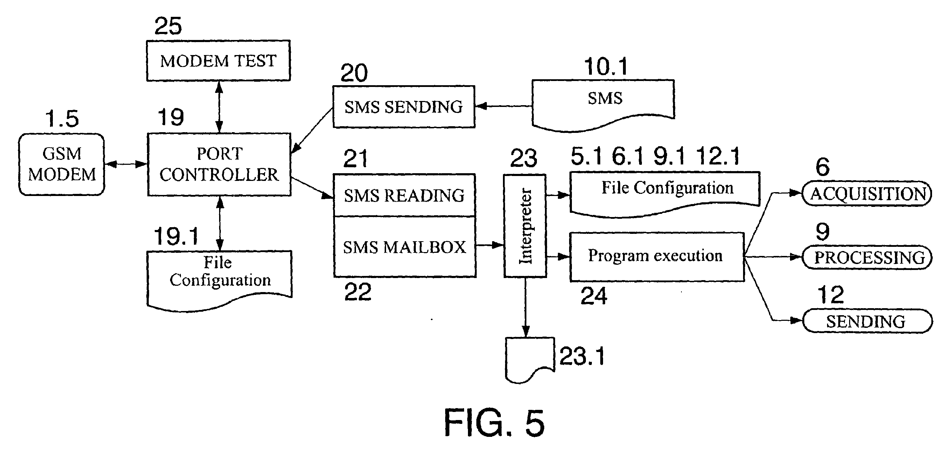

Moreover, the GSM module represented in figure 5 integrates all the operations related with the GSM modem (1.5) and assures that the device is capable of sending and receiving information even if the ETHERNET network is not operational, that is, there is no e-mail service nor access to the WEB.

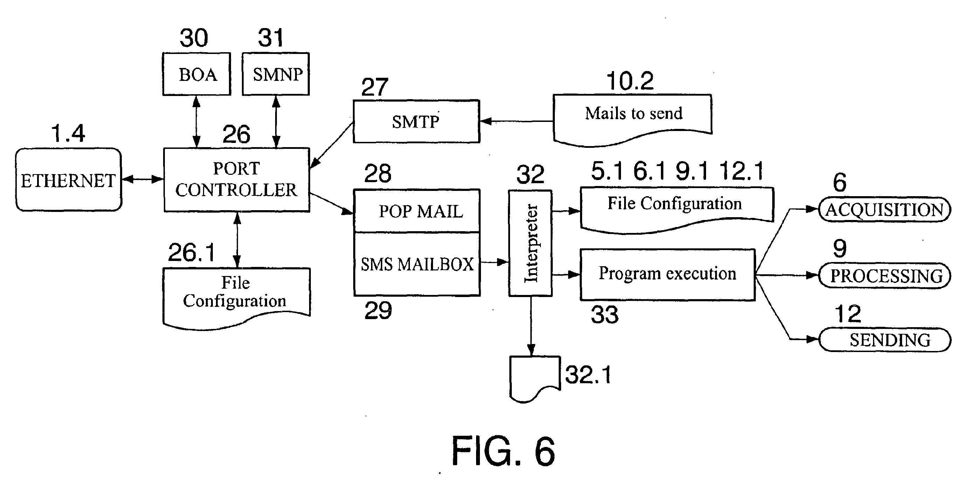

In said figure 6 the port controller module (19) is shown, which controls the GSM modem (1.5) and assures that the programs which need to send or receive information by means of the modem do so in an orderly fashion.

The GSM module is formed by a series of programs, among which is the sending of SMS which reads the SMS file (10.1) generated in the data processing (9) and sends it via SMS. The SMS reading program periodically accesses the controller (19) and subsequently the GSM modem (1.5) to read all the pending messages and store them in the SMS mailbox (22). Thus the little storage capacity that the modem has is liberated and it is assured that no received message gets lost. The SMS mailbox (22) is read by the SMS interpreter (23) which analyses all the received messages and as a function of their content modifies the configuration files (5.1) , (6.1), (9.1) and (12.1), or, by means of the program execution block (24) it runs the programs for acquisition (6), data processing (9) or sending (12.1). All the messages which do not correspond to the foregoing, as for example operator advertising, are stored temporarily in a file (23.1) and are later erased.

The SMS TEST program (25) serves for accessing the modem to check data on coverage, correct operation, status of messages, etc., constituting a checking tool by means of which the device can know the status of its GSM communications.

The port controller (19) communicates with the programs (20), (21) and (25) so that when the modem is not being used, the controller (19) gives the communication line to the first program which formulates a user request, and leaves the remaining requests on standby to attend them on conclusion.

With the configuration file (19.1) this management system is configured, for example indicating to the port controller (19) the maximum timeout of assignment of the modem to each program and the possibility of interruption in the event of receiving a preference instruction.

As can be observed, the functionality of this GSM module is similar to that offered by the WEB module since it allows the system to be administered remotely, but in this case by means of GSM technology.

Clearly in this preferred embodiment of the invention, reference has been made to GSM technology, but it could be applied to other types of mobile telephony service, for example GPRS or UMTS, for which it would only be necessary to modify the port controller (19) and modem (1.5). The remaining modules would remain the same.

The MAIL module has been represented in figure 6 and as it can be appreciated, it has a configuration similar to that of the SMS module except that instead of sending information by SMS it does so by means of e-mails, providing the system with the benefit that by means of emails it is possible to transmit much more data than via an SMS message.

In a manner similar to that of figure 5, the MAIL module has a controller of the hardware device, in this case the ETHERNET link(1.4). The port controller (26) therefore facilitates that the SMTP program (27), the mail POP program (28) send and receive packets of the ETHERNET network, doing so in an orderly fashion. Other programs belonging to other modules, such as the WEB server (30) and the SMNP module (31) of the data captor (6) also use this port controller (26).

The SMTP program (27) reads the MAIL file (10.2) generated in the data processor (9) and sends it over the ETHERNET network after communicating with the port controller (26).

The MAIL POP program (28) reads the pending messages and stores them in an e-mail mailbox (29) which is subsequently read by the e-mail interpreter (32) which analyses all the received messages and as a function of the content modifies the configuration files (5.1), (6.1), (9.1) and (12.1), or by means of the program execution block (33) runs the programs for acquisition (6), processing (9) and sending (12).

The port controller (26) gives the communication line to the first program which requests it, and leaves the subsequent requests on hold until it can attend them. Port controller configuration is carried out by means of its corresponding configuration file (26.1).

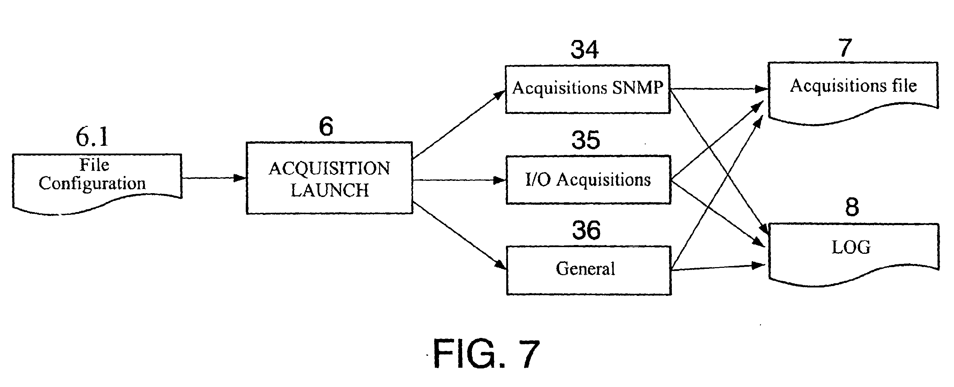

Figure 7 represent the functionality of the acquisition module which serves to search out all the data of the different remote devices (4). The data acquisition (6) reads the configuration file (6.1) to know the addresses where it has to go to search for data together with the meters which it has to read. In a predetermined manner the data can be read from devices connected to the ETHERNET network (34) and form those connected by means of the serial/parallel ports (35). All information gathered will be held in the output files (7) and (8) arranged by search type and even by priority.

The system makes introducing a new search type very simple, since it is only necessary to record the new search program (36) in the static memory (1.2) and update the configuration file (6.1) for reading data (6).

Thus the device developed in the invention, encompasses a group of programs which are run independently, be this when so instructed by the task planner (5) or by remote commands from the centre (3).

It is not considered necessary to extend further the content of this description for an expert in the matter to comprehend its reach and the advantages deriving from the invention, as well as to develop and to implement the object thereof .

Nevertheless, it should be understood that the invention has been described according to a preferred embodiment thereof, whereby it can be subject to modifications without this implying alteration whatsoever to its fundamentals, such modifications being capable of affecting, especially, the form, size and/or manufacturing materials.

## Claims

1. Stand-alone system for the remote management of devices subject to a pay-for-use service, such as printers, fax machines, scanners, servers, routers or any other type of device subject to being employed in a pay-for-use service, without no requirement to connect a computer for management thereof, **characterised in that** it is constituted by an electronic device (1) for compiling, processing and management of data from one or more units (4) subject to pay-for-use, comprising a microcontroller (1.1) which manages the reading of the content of the meters of the units (4) proper, the processing and storage thereof in a dynamic RAM memory (1.2) and subsequently the transmission of said information to a remote central data station (3), through existing telecommunications networks (2), by means of an interface (1.4) for access to the ETHERNET network for sending and receiving electronic mail via Internet, presenting said information in a WEB server, and by means of a GSM modem (1.5) for sending and receiving conventional calls or short messages via radio, said device (1) also having an FPGA circuit (1.1) programmable from the microcontroller (1.1) which is capable of constituting serial or parallel ports or individual inputs and outputs and implementing meters of remote devices (4) which are not equipped with internal meters.

2. Stand-alone system for the remote management of devices subject to a pay-for-use service according to claim 1, **characterised in that** the microprocessor (1.1) of the electronic device (1) manages the remote data transmission by means of the software stored in a memory (1.3), preferably FLASH EEPROM type, constituted by modules of independent programs with a specific function, among which are included: a transmitting and receiving module of short messages through the modem (1.5) according to the specifications of the GSM phase 2 standard; a transmitting and receiving module of the information obtained through ETHERNET by means of electronic mail according to the SMTP standard; a web page server module for access from any browser to the web pages of the device (1); a module for acquisition of data from the meters, by means of the SNMP protocol, also through the ETHERNET interface (1.4); an operating system module, comprising a kernel which manages the hardware resources and the running of the rest of the modules and a system of files capable of sorting all the files and programs of the device (1), controlling the correct operation of all the program modules, as well as of the device in general.

3. Stand-alone system for the remote management of devices subject to a pay-for-use service according to claims 1 and 2, which is **characterised in that** the microprocessor (1.1) acquires the data from the meters, by means of the appropriate specific software, directly through some general purpose outputs / inputs which the microcontroller has, with no requirement for using the ETHERNET interface (1.4).

4. Stand-alone system for the remote management of devices subject to a pay-for-use service according to the previous claims, **characterised in that** the electronic device (1) is capable of managing multiple remote units (4) connected in a network.

5. Stand-alone system for the remote management of devices subject to a pay-for-use service according to the previous claims, **characterised in that** in the first place a configurable acquisition of data (6) is carried out of the remote devices (4) generating, based on the data gathered, a data file (7) wherein the data are classified according to their type and a data report file (8) for the management of the system, these processed data being later used to generate some files in which the data are arranged according to the means of transmission over which they will be sent, a file (10.1) being generated in this way with the data which will be sent by SMS, a file (10.2) for the data sent by E-MAIL and a file (10.3) for the information which will be offered in the WEB server, the data being classified in each of these files according to their priority, and being sent subsequently according to their priority and by any one of the means of communication available, either by means of E-MAILS or by means of GSM, the system also being capable of generating immediate actions (11) when any of the acquired data pertains to high priority situations of the units (4), in which case EMAILS or SMS short messages are sent in an urgent way postponing the sending of the remaining data.

6. Stand-alone system for the remote management of devices subject to a pay-for-use service according to the previous claims, **characterised in that** by means of the GSM communications module, the EMAIL communication module, or by means of the WEB server, it is possible to read from the centre (3) the content of all data files and files of reports existing in the system, as well as to modify the configuration files which determine the functionality of each module participant therein, and it is even permitted to run programs sent by the centre (3) which are translated into instructions concerning the tasks of data acquisition, processing and sending of data.

7. Stand-alone system for the remote management of devices subject to a pay-for-use service according to the previous claims, **characterised in that** for the sending and receiving of messages between the centre (3) and the device (1) the communications can be based on any existing mobile telephony service, such as GPRS, UMTS technology.
